# EUROPEAN PATENT SPECIFICATION

(11) **EP 4 644 713 B1**
(45) Date of publication and mention of the grant of the patent: **04.11.2026**
(21) Application number: 25172550.3
(22) Date of filing: 25.04.2025
(51) Int. Cl.: F16B 37/04

(54) **RETAINER FOR PANELS OF VARYING THICKNESS**
HALTERUNG FÜR PANEELE UNTERSCHIEDLICHER DICKE
DISPOSITIF DE RETENUE POUR PANNEAUX D'ÉPAISSEUR VARIABLE

(30) Priority: 02.05.2024 US 202463641456 P; 22.04.2025 US 202519185525
(43) Date of publication of application: 05.11.2025
(73) Proprietor: Illinois Tool Works Inc., Glenview IL 60025 (US)
(72) Inventor: BEYER, Mark A., Glenview, IL 60025 (US)
(74) Representative: HGF

(56) References cited:
- JP-U- S6 327 709
- US-A- 5 919 019
- US-A1- 2016 208 839
- US-A1- 2019 383 318
- US-B2- 8 016 530

## Description

### BACKGROUND

Background includes at least US-A-5,919,019, US-A1-2016/208839, US-B2-8,016,530, US-A1-2019/383318 and JP-U-S63 27709.

Automotive components demand fastening solutions that are not only reliable and efficient but also simple to manufacture and assemble. Traditional attachment methods often require different retainers tailored to specific component thicknesses-one for thicker components and another for thinner ones. This is particularly problematic given that the thickness of a component often varies depending on the material selected. For example, high-strength steel can typically be formed in thinner gauges than aluminum while still meeting performance requirements. Conventional retainers lack the flexibility to accommodate this full range of thicknesses, limiting their effectiveness in applications involving mixed materials or components with variable cross-sections. As a result, current solutions frequently require switching between multiple clip types based solely on material choice or component geometry. This increases manufacturing complexity, supply chain burden, and the potential for assembly errors.

Accordingly, there is a need for an improved retainer capable of securely fastening components across a wide range of thicknesses using a single design. Such a solution would simplify assembly, reduce part variation, and improve adaptability in modern vehicle architectures utilizing diverse material strategies.

### SUMMARY

The invention is set out in the appended set of claims.

The present disclosure relates generally to a fastening system to form a connection between components, substantially as illustrated by and described in connection with at least one of the figures, as set forth more completely in the claims. More particularly, the present disclosure relates generally to a fastening system having a retainer capable of securely fastening components across a wide range of thicknesses using a single retainer.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1a illustrates a perspective assembly view of the fastening system with a fastener assembly in accordance with aspects of this disclosure.
Figure 1b illustrates a perspective view of the fastening system in a partially assembled position.
Figures 1c and 1d illustrate first and second perspective assembly views of the fastener assembly.
Figures 1e through 1h illustrate first, second, third, and fourth side assembly views of the fastener assembly.
Figure 2a illustrates an isometric view of a retainer of the fastener assembly.
Figure 2b illustrates a side elevation cross-sectional view of the retainer taken along cut line A-A (Figure 2a).
Figure 2c illustrates an isometric cross-sectional view of the retainer taken along cut line A-A (Figure 2a).
Figure 3a illustrates an isometric view of a retainer coupled with a thick component.
Figure 3b illustrates a side elevation cross-sectional view of the retainer coupled with the thick component taken along cut line B-B (Figure 3a).
Figure 3c illustrates an isometric cross-sectional view of the retainer coupled with the thick component taken along cut line B-B (Figure 3a).
Figure 3d illustrates an isometric view of a retainer coupled with a thin component that is thinner than the thick component.
Figure 3e illustrates a side elevation cross-sectional view of the retainer coupled with the thin component taken along cut line C-C (Figure 3d).
Figure 3f illustrates an isometric cross-sectional view of the retainer coupled with the thin component taken along cut line C-C (Figure 3d).

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein is not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent to or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. **In** other words, "x and/or y" means "one or both of x and y." As another example, "x, y, and/or z" means any element of the seven-element set {(x), (y), (z), (x, y), (x, z), (y, z), (x, y, z)}. **In** other words, "x, y, and/or z" means "one or more of x, y, and z."

Disclosed is a retainer configured to accommodate components across a wide range of thicknesses, enabling secure attachment to various components, whether fabricated from a thick or a thin material, with a single design. For instance, certain materials-such as high-strength steel-can typically be manufactured in thinner gauges compared to materials like aluminum, while still meeting structural requirements. As a result, the same component geometry may vary significantly in thickness depending on the material selected by the original equipment manufacturer (OEM). As noted, prior systems historically lacked the flexibility to span a full range, from the thinnest to the thickest components, making them less adaptable in mixed-material or variable-thickness applications.

The disclosed retainer overcomes these limitations by enabling robust and reliable retention across a broad thickness spectrum using a single retainer. For example, the retainer can accommodate components ranging from approximately 0.7 mm to 3.5 mm in thickness. Unlike previous attempts that relied on multiple retention arms to cover different thicknesses, the disclosed retainer incorporates two distinct retention zones, an upper retention zone and a lower retention zone-each optimized for a different portion of the thickness range and position on the same retention member. This dual-zone configuration ensures secure engagement whether the component is at the low or high end of the thickness spectrum or exhibits localized variations in thickness (e.g., a single component having different thicknesses).

By allowing one retainer to be used across a variety of component thicknesses and structural materials (e.g., steel vs. aluminum), the disclosed retainer reduces part count and reduces complexity in assembly processes, while maintaining high-performance retention characteristics.

In one example, a fastener assembly for coupling a first component to a second component, the fastener assembly comprises: a fastener having a head and a shank; and a stamped-metal retainer having a body portion and a pair of retainer legs resiliently coupled to the body portion, wherein the body portion includes a plate with an internally-threaded collar that defines a retainer opening configured to receive and secure at least a portion of the shank, wherein each of the pair of retainer legs defines a first retention zone between a first angled engagement surface and the plate that is configured to accommodate second components within a first thickness range, and a second retention zone between a second angled engagement surface and the plate that is configured to accommodate second components within a second thickness range, and wherein a first positive distance between the first angled engagement surface and the plate is defined so that said first retention zone is configured to accommodate second components within a first thickness range, and wherein a second positive distance between the second angled engagement surface and the plate is defined so that said second retention zone is configured to accommodate second components within a second thickness range, said first distance being greater than said second distance so that said first thickness range is greater than said second thickness range.

In one example, a stamped-metal retainer configured to couple with a fastener having a head and a shank comprises: a body portion including an internally-threaded collar that defines a retainer opening configured to receive and secure at least a portion of the shank, wherein the body portion includes a plate with an internally-threaded collar that defines a retainer opening configured to receive and secure at least a portion of the shank; and a pair of retainer legs resiliently coupled to the body portion, wherein each of the pair of retainer legs defines a first retention zone between a first angled engagement surface and the plate that is configured to accommodate second components within a first thickness range, and a second retention zone between a second angled engagement surface and the plate that is configured to accommodate second components within a second thickness range, and wherein a first positive distance between the first angled engagement surface and the plate is defined so that said first retention zone is configured to accommodate second components within a first thickness range, and wherein a second positive distance between the second angled engagement surface and the plate is defined so that said second retention zone is configured to accommodate second components within a second thickness range, said first distance being greater than said second distance so that said first thickness range is greater than said second thickness range.

In some examples, each of the pair of retainer legs comprises a pair of spaced-apart second tabs with a first tab positioned in between.

In some examples, the first tab defines the first angled engagement surface and at least one of the pair of spaced-apart second tabs define the second angled engagement surface.

In some examples, a planar surface of the first tab defines the first angled engagement surface.

In some examples, an edge of the at least one of the pair of spaced-apart second tabs define the second angled engagement surface.

In some examples, each of the pair of retainer legs comprises an outer planar portion and an inner planar portion connected by a bend section, wherein the first tab and the pair of spaced-apart second tabs are coupled to the outer planar portion.

In some examples, the pair of second tabs are positioned on opposite sides of the outer portion.

In some examples, the pair of second tabs is coupled to the outer planar portion at a right angle.

In some examples, the first tab is coupled to an end of the outer planar portion at a transverse angle.

In some examples, the inner planar portion comprises a window configured to receive the first tab during installation of the retainer.

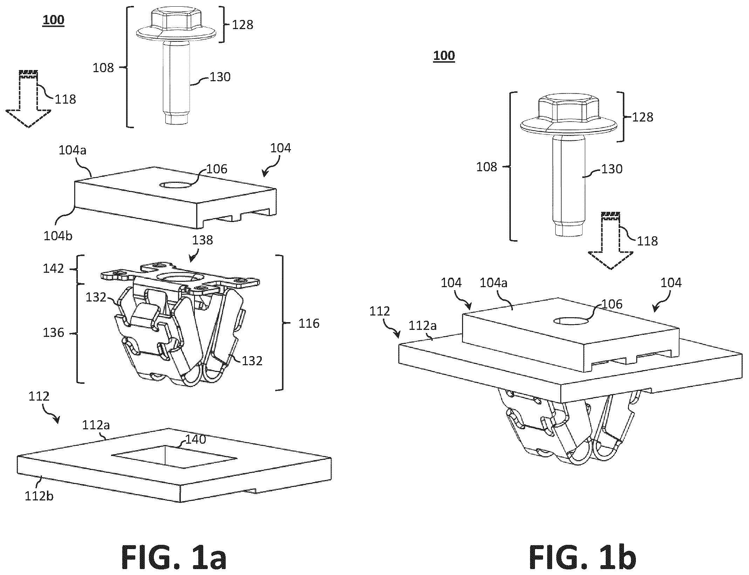

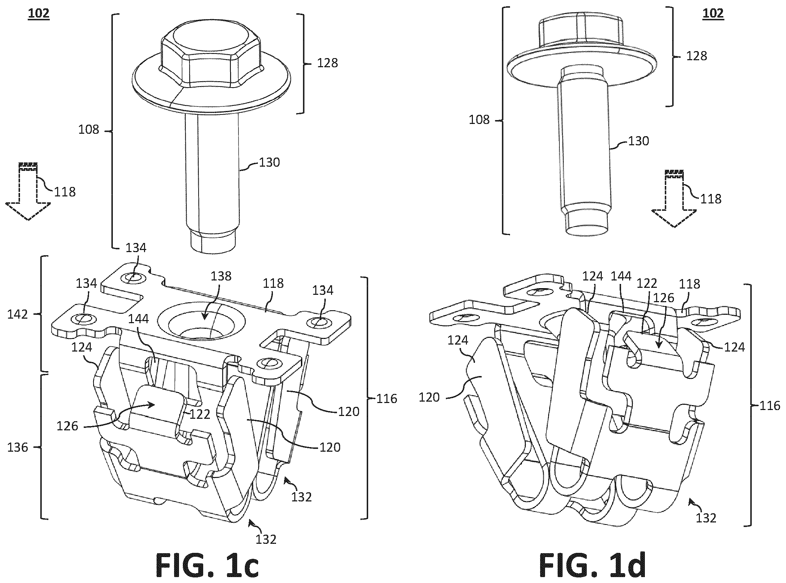

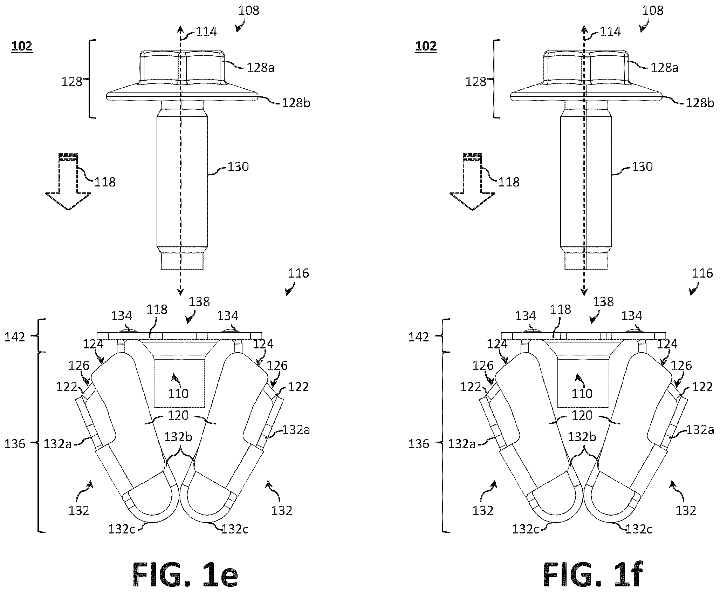

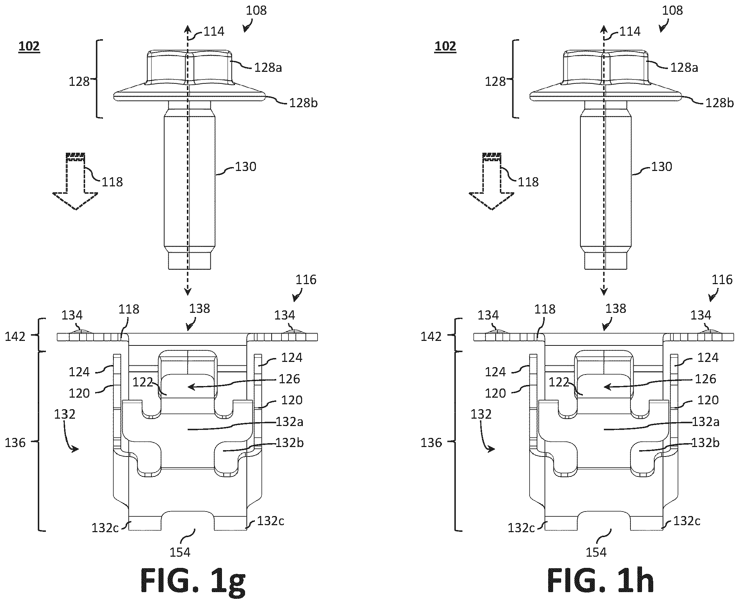

Figure 1a illustrates a perspective assembly view of the fastening system 100 with a fastener assembly 102 in accordance with aspects of this disclosure, while Figure 1b illustrates a perspective view of the fastening system 100 in an assembled position (apart from its fastener 108, which is illustrated as detached). The illustrated fastening system 100 generally comprises a fastener assembly 102 for installation in a second component 112 and to couple with a first component 104. As illustrated, the fastener assembly 102 is composed of multiple components, including a fastener 108 and a retainer 116. Figures 1c and 1d illustrate first and second perspective assembly views of the fastener assembly 102, while Figures 1e through 1h illustrate first, second, third, and fourth side assembly views of the fastener assembly 102. As can be appreciated, the fastener 108 and the retainer 116 of the fastener assembly 102 are configured to engage and securely retain one another, facilitating a reliable connection between the first component 104 and the second component 112 via the fastener 108.

The fastener 108 is configured to attach to the retainer 116, which, in turn, is attached to the second component 112. As illustrated, the fastener 128 comprises a head 128a and a shank 130. The shank 130 extends generally perpendicularly from the underside of the head 128a. **In** the illustrated example, the head 128a is hexagonal and the shank 130 is threaded. While the fastener 128 is illustrated as a threaded bolt having a head 128a that is hexagonal, other types of fasteners are contemplated. For example, the fastener 128 is illustrated as a flanged bolt having a flange 128b between the head 128a and the threaded shank 130.

In the illustrated example, the first component 104 defines an A-side surface 104a (e.g., a first surface, such as an exterior surface) and a B-side surface 104b (e.g., a second surface, such as an interior surface). The second component 112 similarly defines an A-side surface 112a (e.g., a first surface, such as an exterior surface) and a B-side surface 112b (e.g., a second surface, such as an interior surface). The first component 104 and/or the second component 112 may be, for example, an automotive panel or a structural component of a vehicle, such as doors, pillars (e.g., an A-pillar, B-pillar, C-pillar, etc.), airbag components, dashboard components (e.g., a cross member, bracket, frame, etc.), seat frames, center consoles, fenders, sheet metal framework, or the like. Depending on the application, the first component 104 and/or the second component 112 may be fabricated from metal (or a metal alloy), synthetic or semi-synthetic polymers (e.g., plastics such as acrylonitrile butadiene styrene (ABS) and polyvinyl chloride (PVC)), composite materials (e.g., fiberglass), or a combination thereof.

Each of the first component 104 and the second component 112 includes, defines, or otherwise provides one or more openings (e.g., holes, windows, or cutouts) formed during the manufacturing of the first component 104 and the second component 112, as applicable. As best illustrated in Figure 1a, the first component 104 defines a first opening 106 and the second component 112 defines a second opening 140 that are each configured to, once aligned, receive and retain a portion of the fastener assembly 102 (whether the retainer 116 or the fastener 108). In the illustrated example, the first component 104 provides the first opening 106 as a rectangular window sized to receive a portion of the retainer 116, while the second component 112 provides the second opening 140 as a round hole sized to receive a portion of the fastener 128.

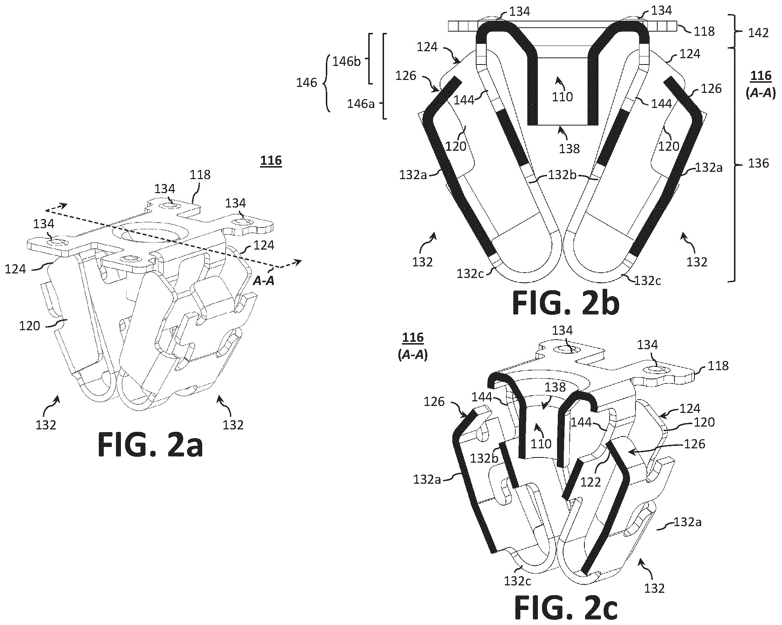

Figure 2a illustrates an isometric view of the retainer 116 of the fastener assembly 102, while Figures 2b and 2c illustrate, respectively, side elevation and isometric cross-sectional views of the retainer 116 taken along cut line A-A (Figure 2a). The retainer 116 includes a body portion 142 and a fastener portion 136 having retainer legs 132.

The illustrated body portion 142 includes a plate 118 that defines a retainer opening 138, through which the shank 130 of the fastener 128 passes during assembly. In the illustrated example, the retainer 116 comprises an internally-threaded collar 110 formed in or on the plate 118, which defines the retainer opening 138. The illustrated internally-threaded collar 110 is oriented downwardly from the plate 118 such that it extends between the retainer legs 132 of the fastener portion 136. The fastener 128 threadedly engages the internally-threaded collar 110 through a rotational movement about a central axis 114. The body portion 142 can include one or more spacers 134 formed therein or thereon (e.g., a protuberance facing away from the retainer legs 132) that are configured to contact the first component 104 when installed, thereby maintaining a gap between the plate 118 of the retainer 116 and the first component 104 to mitigate unwanted buzz, squeak, and rattle (BSR).

The fastener portion 136 defines a plurality of distinct retention zones 146, illustrated as a lower retention zone 146a (a first retention zone) to accommodate second components having a first thickness range (e.g., thicker components) and an upper retention zone 146b (a second retention zone) to accommodate second components having a second thickness range (e.g., thinner components). Specifically, the lower retention zone 146a is configured to accommodate a second component 112 having a greater thickness, while the upper retention zone 146b is configured to accommodate a second component 112 having a lesser thickness. With reference to Figure 2B, the lower retention zone 146a is defined between the underside of the plate 118 and a first angled engagement surface 126, whereas the upper retention zone 146b is defined between the underside of the plate 118 and a second angled engagement surface 124.

The respective slopes of the first angled engagement surface 126 and the second angled engagement surface 124 enable the fastener portion 136 to accommodate variations in the thickness of second components 112. The plurality of distinct retention zones 146 collectively accommodate a wide range of thicknesses, allowing for secure retention of both thin and thick second components 112 (and variation within each range). In one example, the retention zones 146 are capable of accommodating second components 112 with thicknesses ranging from approximately 0.7 mm to 3.5 mm. Within this range, the lower retention zone 146a generally facilitates retention of the thicker portion of the range, while the upper retention zone 146b accommodates the thinner portion. In certain cases, particularly when the second component 112 falls within an intermediate thickness range, the component may be retained simultaneously by both the first angled engagement surface 126 and the second angled engagement surface 124, effectively providing transitional or dual-zone engagement for enhanced stability and retention performance.

The illustrated fastener portion 136 includes two retainer legs 132 that are resiliently attached to and beneath the body portion 142 (e.g., coupled to the plate 118). The retainer legs 132 are configured to flex relative to the central axis 114 (e.g., toward and away from) as the fastener portion 136 is inserted through the second opening 140 in the second component 112. In the illustrated example, each retainer leg 132 comprises of an outer portion 132a and an inner portion 132b connected by a bend section 132c (e.g., a u-shaped bend section). Each of the outer portion 132a and the inner portion 132b are illustrated as generally planar (e.g., flat), parallel, and spaced to form a gap therebetween.

Each retainer leg 132 includes one or more tabs attached to its outer portion 132a. In the illustrated example, each retainer leg 132 comprises a first tab 122 and a pair of spaced-apart second tabs 120. In the illustrated example, the pair of second tabs 120 are positioned on opposite sides of the outer portion 132a with the first tab 122 positioned in between and formed at a free end of the outer portion 132a. With reference to Figures 1c and 1d, the first tab 122 is generally planar and bent toward the central axis 114 at an angle (e.g., a transverse angle, illustrated as a non-right angle) relative to the outer portion 132a such that a planar surface of the first tab 122 defines or serves as the first angled engagement surface 126. The inner portion 132b can define a window 144 configured to receive the first tab 122 to avoid obstruction or interference when the outer portion 132a is biased toward the inner portion 132b (e.g., during insertion in the second opening 140).

With reference to Figures 1e and 1f, each of the pair of second tabs 120 is shaped to define a second angled engagement surface 124. For example, the pair of second tabs 120 can be stamped during manufacturing to define a profile where an edge of each second tab 120 defines the second angled engagement surface 124. The pair of second tabs 120 are, in turn, attached to the outer portion 132a at a transverse angle (e.g., about 90 degrees, a right angle). Additionally, the first tab 122 and the second tab 120 are positioned such that the first angled engagement surface 126 and the second angled engagement surface 124 are positioned at different vertical positions, thus defining the distinct retention zones 146. That is, the distance between the first angled engagement surface 126 and the body portion 142 is greater than the distance between the second angled engagement surface 124 and the body portion 142.

The components of the fastener assembly 102 may be formed as unitary structures. The retainer 116 may be fabricated as a single component using a metal stamping process. For example, the retainer 116 can be stamped from a sheet of metal using a die stamping process to define the geometry of the various features and then bent to assume the shape of the retainer 116 via one or more bending steps. When manufactured as a stamped-metal component, for example, the first tab 122 and the second tab 120 are bent or otherwise oriented inwardly (toward the central axis 114). That is, the sheet of metal can be stamped and bent to define, *inter alia,* the first angled engagement surface 126 and the second angled engagement surface 124. The internally-threaded collar 110 can be extruded and/or cold-formed from the plate 118.

The fastener 108 can be fabricated from metal by forming a metal blank through processes such as hot forging or precision machining to achieve the desired size and shape for the shank 130 and head 128a. The shank 130 is then threaded using dies or threading tools, and in some cases, the fastener 108 undergoes heat treatment to enhance its mechanical properties, followed by surface treatments (e.g., galvanizing or plating to improve corrosion resistance and durability).

In another example, the fastener 108 can be fabricated from plastic via mold tooling and a plastic-injection molding process. In yet another example, the fastener 108 can be a printed thermoplastic material component that can be printed with great accuracy and with numerous details, which is particularly advantageous for creating components requiring complex and/or precise features. Additive manufacturing techniques obviate the need for mold tooling typically associated with plastic injection molding, thereby lowering up-front manufacturing costs, which is particularly advantageous in low-volume productions. In some examples, the fastener assembly 102 may be fabricated using material extrusion (e.g., fused deposition modeling (FDM), stereolithography (SLA), selective laser sintering (SLS), material jetting, binder jetting, powder bed fusion, directed energy deposition, VAT photopolymerization, and/or any other suitable type of additive manufacturing/3D printing process).

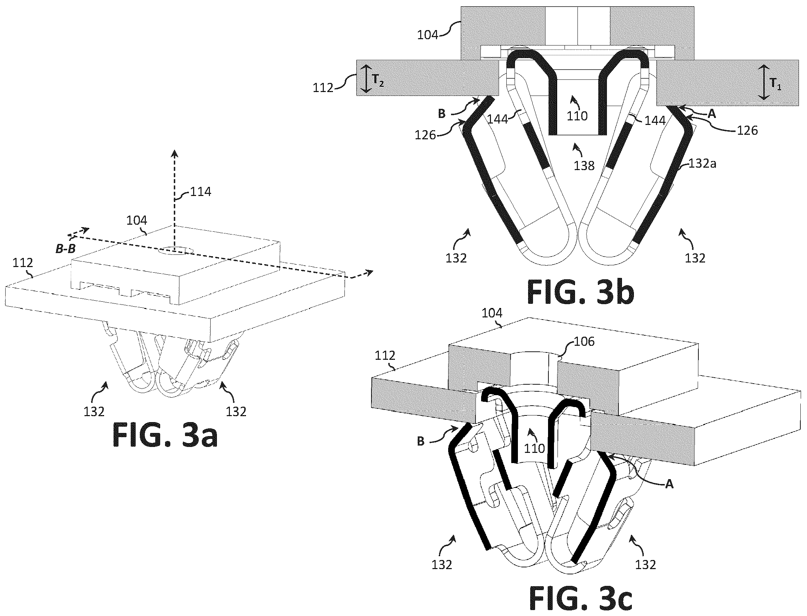

Figures 3a through 3f illustrate views of the retainer 116 coupled with a second component 112 to demonstrate the distinct retention zones 146. That is, each of the pair of retainer legs 132 defines the lower retention zone 146a (a first retention zone) between a first angled engagement surface 126 and the plate 118 that is configured to accommodate second components 112 within a first thickness range, and an upper retention zone 146b (a second retention zone) between a second angled engagement surface 124 and the plate 118 that is configured to accommodate second components 112 within a second thickness range. As illustrated, the distance between the first angled engagement surface 126 and the plate 118 is greater than the distance between the second angled engagement surface 124 and the plate 118.

Figure 3a illustrates an isometric view of a retainer 116 coupled with a second component 112 having a first thickness (e.g., a thick second component), while Figures 3b and 3c respectively show a side elevation view and an isometric cross-sectional view of the retainer 116 engaged with the thick second component 112, taken along cut line B-B in Figure 3a. In this example, the second component 112 may be a panel formed from a relatively soft material, such as aluminum.

The thick second component 112 is secured within the lower retention zone 146a, positioned between the underside of the plate 118 and the first angled engagement surfaces 126. For illustrative purposes, the second component 112 is shown with two different localized thicknesses, T₁ and T₂, both of which fall within the lower retention zone 146a. The slope of the first angled engagement surfaces 126 accommodates these variations in thickness by contacting the region of thickness T₁ at point A along the slope, and the region of thickness T₂ at point B along the slope.

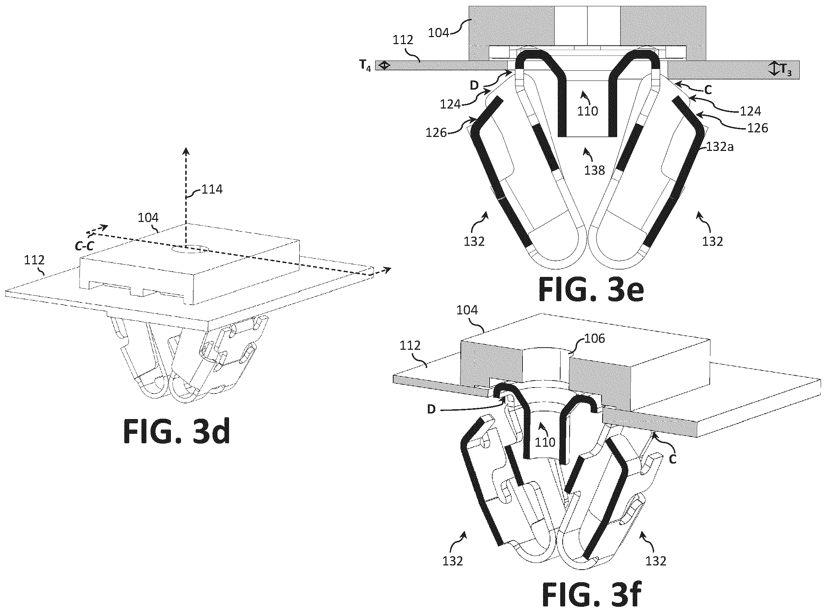

Figure 3d illustrates an isometric view of a retainer 116 coupled with a second component 112 having a second thickness (e.g., a thin second component), while Figures 3e and 3f respectively show a side elevation view and an isometric cross-sectional view of the retainer 116 engaged with the thin second component 112, taken along cut line C-C in Figure 3d. In this example, the second component 112 may be a panel formed from a relatively hard material, such as steel.

The thin second component 112 is secured within the upper retention zone 146b, positioned between the underside of the plate 118 and the second angled engagement surfaces 124. For illustrative purposes, the second component 112 is shown with two different localized thicknesses, T₃ and T₄, both of which fall within the upper retention zone 146b. The slope of the second angled engagement surfaces 124 accommodates these variations in thickness by contacting the region of thickness T₃ at point C along the slope, and the region of thickness T₄ at point D along the slope.

## Claims

1. A fastener assembly (102) for coupling a first component (104) to a second component (112), the fastener assembly (102) comprising:
a fastener (128) having a head (128a) and a shank (130); and
a stamped-metal retainer (116) having a body portion (142) and a pair of retainer legs (132) resiliently coupled to the body portion (142),
wherein the body portion (142) includes a plate (118) with an internally-threaded collar (110) that defines a retainer opening (138) configured to receive and secure at least a portion of the shank (130),
wherein each of the pair of retainer legs (132) defines a first retention zone (146a) between a first angled engagement surface (126) and the plate (118) that is configured to accommodate second components (112) within a first thickness range, and a second retention zone (146b) between a second angled engagement surface (124) and the plate (118) that is configured to accommodate second components (112) within a second thickness range,
**characterized in that** a first positive distance between the first angled engagement surface (126) and the plate (118) is defined so that said first retention zone (146a) is configured to accommodate second components (112) within a first thickness range, and
**in that** a second positive distance between the second angled engagement surface (124) and the plate (118) is defined so that said second retention zone (146a) is configured to accommodate second components (112) within a second thickness range, said first distance being greater than said second distance so that said first thickness range is greater than said second thickness range.

2. The fastener assembly (102) of claim 1, wherein each of the pair of retainer legs (132) comprises a pair of spaced-apart second tabs (120) with a first tab (122) positioned in between.

3. The fastener assembly (102) of claim 2, wherein the first tab (122) defines the first angled engagement surface (126) and at least one of the pair of spaced-apart second tabs (120) define the second angled engagement surface (124).

4. The fastener assembly (102) of claim 2 or claim 3, wherein a planar surface of the first tab (122) defines the first angled engagement surface (126).

5. The fastener assembly (102) of claims 2 to 4, wherein an edge of the at least one of the pair of spaced-apart second tabs (120) define the second angled engagement surface (124).

6. The fastener assembly (102) of any one of claims 2 to 5, wherein each of the pair of retainer legs (132) comprises an outer planar portion (132a) and an inner planar portion (132b) connected by a bend section (132c), wherein the first tab (122) and the pair of spaced-apart second tabs (120) are coupled to the outer planar portion (132a).

7. The fastener assembly (102) of claim 6, wherein the pair of second tabs (120) are positioned on opposite sides of the outer portion (132a), and/or wherein the pair of second tabs (120) is coupled to the outer planar portion (132a) at a right angle.

8. The fastener assembly (102) of claim 6 or claim 7, wherein the first tab (122) is coupled to an end of the outer planar portion (132a) at a transverse angle, and/or wherein the inner planar portion (132b) comprises a window (144) configured to receive the first tab (122) during installation of the retainer (116).

9. A stamped-metal retainer (116) configured to couple with a fastener (128) having a head (128a) and a shank (130), the stamped-metal retainer (116) comprising:
a body portion (142) and a pair of retainer legs (132) resiliently coupled to the body portion (142),
wherein the body portion (142) includes a plate (118) with an internally-threaded collar (110) that defines a retainer opening (138) configured to receive and secure at least a portion of the shank (130),
wherein each of the pair of retainer legs (132) defines a first retention zone (146a) between a first angled engagement surface (126) and the plate (118) that is configured to accommodate second components (112) within a first thickness range, and a second retention zone (146b) between a second angled engagement surface (124) and the plate (118) that is configured to accommodate second components (112) within a second thickness range,
**characterized in that** a first positive distance between the first angled engagement surface (126) and the plate (118) is defined so that said first retention zone (146a) is configured to accommodate second components (112) within a first thickness range, and
**in that** a second positive distance between the second angled engagement surface (124) and the plate (118) is defined so that said second retention zone (146a) is configured to accommodate second components (112) within a second thickness range, said first distance being greater than said second distance so that said first thickness range is greater than said second thickness range.

10. The stamped-metal retainer (116) of claim 9, wherein each of the pair of retainer legs (132) comprises a pair of spaced-apart second tabs (120) with a first tab (122) positioned in between.

11. The stamped-metal retainer (116) of claim 10, wherein the first tab (122) defines the first angled engagement surface (126) and at least one of the pair of spaced-apart second tabs (120) define the second angled engagement surface (124).

12. The stamped-metal retainer (116) of claim 10 or claim 11, wherein a planar surface of the first tab (122) defines the first angled engagement surface (126), and/or wherein an edge of the at least one of the pair of spaced-apart second tabs (120) define the second angled engagement surface (124).

13. The stamped-metal retainer (116) of any one of claims 10 to 12, wherein each of the pair of retainer legs (132) comprises an outer planar portion (132a) and an inner planar portion (132b) connected by a bend section (132c), wherein the first tab (122) and the pair of spaced-apart second tabs (120) are coupled to the outer planar portion (132a).

14. The stamped-metal retainer (116) of claim 13, wherein the pair of second tabs (122) are positioned on opposite sides of the outer portion (132a), and/or wherein the pair of second tabs (120) is coupled to the outer planar portion (132a) at a right angle.

15. The stamped-metal retainer (116) of claim 13 or claim 14, wherein the first tab (122) is coupled to an end of the outer planar portion (132a) at a transverse angle, and/or wherein the inner planar portion (132b) comprises a window (144) configured to receive the first tab (122) during installation of the retainer (116).

## Patentansprüche

1. Befestigungselementbaugruppe (102) für ein Koppeln einer ersten Komponente (104) mit einer zweiten Komponente (112), die Befestigungselementbaugruppe (102) aufweisend:
ein Befestigungselement (128) mit einem Kopf (128a) und einem Schaft (130); und
einen Halter (116) aus gestanztem Metall, der einen Körperabschnitt (142) und ein Paar Halterbeine (132), die elastisch mit dem Körperabschnitt (142) gekoppelt sind, aufweist,
wobei der Körperabschnitt (142) eine Platte (118) mit einem mit Innengewinde versehenen Kragen (110) umfasst, der eine Halteröffnung (138) definiert, die dazu eingerichtet ist, mindestens einen Abschnitt des Schafts (130) aufzunehmen und zu sichern,
wobei jedes des Paares von Halterbeinen (132) eine erste Haltezone (146a) zwischen einer ersten abgewinkelten Eingriffsfläche (126) und der Platte (118), die so eingerichtet ist, dass sie zweite Komponenten (112) innerhalb eines ersten Stärkenbereichs aufnimmt, und eine zweite Haltezone (146b) zwischen einer zweiten abgewinkelten Eingriffsfläche (124) und der Platte (118), die so eingerichtet ist, dass sie zweite Komponenten (112) innerhalb eines zweiten Stärkenbereichs aufnimmt, definiert,
**dadurch gekennzeichnet, dass** ein erster positiver Abstand zwischen der ersten abgewinkelten Eingriffsfläche (126) und der Platte (118) derart definiert ist, dass die erste Haltezone (146a) eingerichtet ist, zweite Komponenten (112) innerhalb eines ersten Stärkenbereichs aufzunehmen, und
dadurch, dass ein zweiter positiver Abstand zwischen der zweiten abgewinkelten Eingriffsfläche (124) und der Platte (118) derart definiert ist, dass die zweite Haltezone (146a) eingerichtet ist, zweite Komponenten (112) innerhalb eines zweiten Stärkenbereichs aufzunehmen, wobei der erste Abstand größer als der zweite Abstand ist, sodass der erste Stärkenbereich größer als der zweite Stärkenbereich ist.

2. Befestigungselementbaugruppe (102) nach Anspruch 1, wobei jedes der beiden Halterbeine (132) ein Paar von beabstandeten zweiten Laschen (120) mit einer dazwischen angeordneten ersten Lasche (122) aufweist.

3. Befestigungselementbaugruppe (102) nach Anspruch 2, wobei die erste Lasche (122) die erste abgewinkelte Eingriffsfläche (126) definiert und mindestens eine des Paares beabstandeter zweiter Laschen (120) die zweite abgewinkelte Eingriffsfläche (124) definiert.

4. Befestigungselementbaugruppe (102) nach Anspruch 2 oder Anspruch 3, wobei eine ebene Oberfläche der ersten Lasche (122) die erste abgewinkelte Eingriffsfläche (126) definiert.

5. Befestigungselementbaugruppe (102) nach den Ansprüchen 2 bis 4, wobei eine Kante mindestens einer des Paares beabstandeter zweiter Laschen (120) die zweite abgewinkelte Eingriffsfläche (124) definiert.

6. Befestigungselementbaugruppe (102) nach einem der Ansprüche 2 bis 5, wobei jedes des Paares von Halterbeinen (132) einen äußeren ebenen Abschnitt (132a) und einen inneren ebenen Abschnitt (132b) aufweist, die durch einen Biegeabschnitt (132c) verbunden sind, wobei die erste Lasche (122) und das Paar von beabstandeten zweiten Laschen (120) mit dem äußeren ebenen Abschnitt (132a) gekoppelt sind.

7. Befestigungselementbaugruppe (102) nach Anspruch 6, wobei das Paar zweiter Laschen (120) auf gegenüberliegenden Seiten des äußeren Abschnitts (132a) positioniert ist, und/oder wobei das Paar zweiter Laschen (120) mit dem äußeren ebenen Abschnitt (132a) in einem rechten Winkel gekoppelt ist.

8. Befestigungselementbaugruppe (102) nach Anspruch 6 oder Anspruch 7, wobei die erste Lasche (122) mit einem Ende des äußeren ebenen Abschnitts (132a) in einem Querwinkel gekoppelt ist, und/oder wobei der innere ebene Abschnitt (132b) ein Fenster (144) aufweist, das so eingerichtet ist, dass es die erste Lasche (122) während der Installation des Halters (116) aufnimmt.

9. Halter (116) aus gestanztem Metall, der dazu eingerichtet ist, sich mit einem Befestigungselement (128) zu koppeln, das einen Kopf (128a) und einen Schaft (130) aufweist, der Halter (116) aus gestanztem Metall aufweisend:
einen Körperabschnitt (142) und ein Paar Halterbeine (132), die elastisch mit dem Körperabschnitt (142) gekoppelt sind,
wobei der Körperabschnitt (142) eine Platte (118) mit einem mit Innengewinde versehenen Kragen (110) umfasst, der eine Halteröffnung (138) definiert, die dazu eingerichtet ist, mindestens einen Abschnitt des Schafts (130) aufzunehmen und zu sichern,
wobei jedes des Paares von Halterbeinen (132) eine erste Haltezone (146a) zwischen einer ersten abgewinkelten Eingriffsfläche (126) und der Platte (118), die so eingerichtet ist, dass sie zweite Komponenten (112) innerhalb eines ersten Stärkenbereichs aufnimmt, und eine zweite Haltezone (146b) zwischen einer zweiten abgewinkelten Eingriffsfläche (124) und der Platte (118), die so eingerichtet ist, dass sie zweite Komponenten (112) innerhalb eines zweiten Stärkenbereichs aufnimmt, definiert,
**dadurch gekennzeichnet, dass** ein erster positiver Abstand zwischen der ersten abgewinkelten Eingriffsfläche (126) und der Platte (118) derart definiert ist, dass die erste Haltezone (146a) eingerichtet ist, zweite Komponenten (112) innerhalb eines ersten Stärkenbereichs aufzunehmen, und
dadurch, dass ein zweiter positiver Abstand zwischen der zweiten abgewinkelten Eingriffsfläche (124) und der Platte (118) derart definiert ist, dass die zweite Haltezone (146a) eingerichtet ist, zweite Komponenten (112) innerhalb eines zweiten Stärkenbereichs aufzunehmen, wobei der erste Abstand größer als der zweite Abstand ist, sodass der erste Stärkenbereich größer als der zweite Stärkenbereich ist.

10. Halter (116) aus gestanztem Metall nach Anspruch 9, wobei jedes des Paares von Halterbeinen (132) ein Paar beabstandeter zweiter Laschen (120) mit einer dazwischen angeordneten ersten Lasche (122) aufweist.

11. Halter (116) aus gestanztem Metall nach Anspruch 10, wobei die erste Lasche (122) die erste abgewinkelte Eingriffsfläche (126) definiert und mindestens eine des Paares beabstandeter zweiter Laschen (120) die zweite abgewinkelte Eingriffsfläche (124) definiert.

12. Halter (116) aus gestanztem Metall nach Anspruch 10 oder Anspruch 11, wobei eine ebene Oberfläche der ersten Lasche (122) die erste abgewinkelte Eingriffsfläche (126) definiert, und/oder wobei eine Kante mindestens einer des Paares beabstandeter zweiter Laschen (120) die zweite abgewinkelte Eingriffsfläche (124) definiert.

13. Halter (116) aus gestanztem Metall nach einem der Ansprüche 10 bis 12, wobei jedes des Paares von Halterbeinen (132) einen äußeren ebenen Abschnitt (132a) und einen inneren ebenen Abschnitt (132b) aufweist, die durch einen Biegeabschnitt (132c) verbunden sind, wobei die erste Lasche (122) und das Paar beabstandeter zweiter Laschen (120) mit dem äußeren ebenen Abschnitt (132a) verbunden sind.

14. Halter (116) aus gestanztem Metall nach Anspruch 13, wobei das Paar zweiter Laschen (122) auf gegenüberliegenden Seiten des äußeren Abschnitts (132a) positioniert ist und/oder wobei das Paar zweiter Laschen (120) mit dem äußeren ebenen Abschnitt (132a) in einem rechten Winkel gekoppelt ist.

15. Halter (116) aus gestanztem Metall nach Anspruch 13 oder Anspruch 14, wobei die erste Lasche (122) mit einem Ende des äußeren ebenen Abschnitts (132a) in einem Querwinkel gekoppelt ist, und/oder wobei der innere ebene Abschnitt (132b) ein Fenster (144) aufweist, das so eingerichtet ist, dass es die erste Lasche (122) während der Installation des Halters (116) aufnimmt.

## Revendications

1. Ensemble de fixation (102) pour le couplage d'un premier composant (104) à un deuxième composant (112), l'ensemble de fixation (102) comprenant :
une fixation (128) ayant une tête (128a) et une tige (130) ; et
un dispositif de retenue en métal estampé (116) ayant une partie de corps (142) et une paire de pattes de retenue (132) couplées de manière élastique à la partie de corps (142),
dans lequel la partie de corps (142) comprend une plaque (118) avec un collier à filetage interne (110) qui définit une ouverture de retenue (138) configurée pour recevoir et fixer au moins une partie de la tige (130),
dans lequel chacune de la paire de pattes de retenue (132) définit une première zone de retenue (146a) entre une première surface d'engagement angulaire (126) et la plaque (118) qui est configurée pour recevoir des deuxièmes composants (112) dans une première plage d'épaisseur, et une deuxième zone de retenue (146b) entre une deuxième surface d'engagement angulaire (124) et la plaque (118) qui est configurée pour recevoir des deuxièmes composants (112) dans une deuxième plage d'épaisseur,
**caractérisé en ce qu'**une première distance positive entre la première surface d'engagement inclinée (126) et la plaque (118) est définie de sorte que ladite première zone de retenue (146a) est configurée pour recevoir des deuxièmes composants (112) dans une première plage d'épaisseur, et
**en ce qu'**une deuxième distance positive entre la deuxième surface d'engagement inclinée (124) et la plaque (118) est définie de sorte que ladite deuxième zone de retenue (146a) est configurée pour recevoir des deuxièmes composants (112) dans une deuxième plage d'épaisseur, ladite première distance étant supérieure à ladite deuxième distance de sorte que ladite première plage d'épaisseur est supérieure à ladite deuxième plage d'épaisseur.

2. Ensemble de fixation (102) selon la revendication 1, dans lequel chacune de la paire de pattes de retenue (132) comprend une paire de deuxièmes pattes espacées (120) avec une première patte (122) positionnée entre elles.

3. Ensemble de fixation (102) selon la revendication 2, dans lequel la première patte (122) définit la première surface d'engagement angulaire (126) et au moins une de la paire de deuxièmes pattes espacées (120) définit la deuxième surface d'engagement angulaire (124).

4. Ensemble de fixation (102) selon la revendication 2 ou la revendication 3, dans lequel une surface plane de la première patte (122) définit la première surface d'engagement inclinée (126).

5. Ensemble de fixation (102) selon les revendications 2 à 4, dans lequel le bord d'au moins une de la paire de deuxièmes pattes espacées (120) définit la deuxième surface d'engagement angulaire (124).

6. Ensemble de fixation (102) selon l'une quelconque des revendications 2 à 5, dans lequel chacune de la paire de pattes de retenue (132) comprend une partie plane extérieure (132a) et une partie plane intérieure (132b) reliées par une section coudée (132c), dans lequel la première languette (122) et la paire de deuxièmes languettes espacées (120) sont couplées à la partie plane extérieure (132a).

7. Ensemble de fixation (102) selon la revendication 6, dans lequel la paire de deuxièmes languettes (120) est positionnée sur des côtés opposés de la partie extérieure (132a), et/ou dans lequel la paire de deuxièmes languettes (120) est couplée à la partie plane extérieure (132a) à angle droit.

8. Ensemble de fixation (102) selon la revendication 6 ou la revendication 7, dans lequel la première languette (122) est couplée à une extrémité de la partie plane extérieure (132a) selon un angle transversal, et/ou dans lequel la partie plane intérieure (132b) comprend une fenêtre (144) configurée pour recevoir la première languette (122) pendant l'installation de l'élément de retenue (116).

9. Dispositif de retenue en métal estampé (116) configuré pour se coupler avec un élément de fixation (128) ayant une tête (128a) et une tige (130), le dispositif de retenue en métal estampé (116) comprenant :
une partie de corps (142) et une paire de pattes de retenue (132) couplées de manière élastique à la partie de corps (142),
dans lequel la partie de corps (142) comprend une plaque (118) avec un collier à filetage interne (110) qui définit une ouverture de retenue (138) configurée pour recevoir et fixer au moins une partie de la tige (130),
dans lequel chacune de la paire de pattes de retenue (132) définit une première zone de retenue (146a) entre une première surface d'engagement angulaire (126) et la plaque (118) qui est configurée pour recevoir des deuxièmes composants (112) dans une première plage d'épaisseur, et une deuxième zone de retenue (146b) entre une deuxième surface d'engagement angulaire (124) et la plaque (118) qui est configurée pour recevoir des deuxièmes composants (112) dans une deuxième plage d'épaisseur,
**caractérisé en ce qu'**une première distance positive entre la première surface d'engagement inclinée (126) et la plaque (118) est définie de sorte que ladite première zone de retenue (146a) est configurée pour recevoir des deuxièmes composants (112) dans une première plage d'épaisseur, et
**en ce qu'**une deuxième distance positive entre la deuxième surface d'engagement inclinée (124) et la plaque (118) est définie de sorte que ladite deuxième zone de retenue (146a) est configurée pour recevoir des deuxièmes composants (112) dans une deuxième plage d'épaisseur, ladite première distance étant supérieure à ladite deuxième distance de sorte que ladite première plage d'épaisseur est supérieure à ladite deuxième plage d'épaisseur.

10. Dispositif de retenue en métal estampé (116) selon la revendication 9, dans lequel chacune de la paire de pattes de retenue (132) comprend une paire de deuxièmes pattes espacées (120) avec une première patte (122) positionnée entre elles.

11. Dispositif de retenue en métal estampé (116) selon la revendication 10, dans lequel la première languette (122) définit la première surface d'engagement angulaire (126) et au moins une de la paire de deuxièmes languettes espacées (120) définit la deuxième surface d'engagement angulaire (124).

12. Dispositif de retenue en métal estampé (116) selon la revendication 10 ou la revendication 11, dans lequel une surface plane de la première languette (122) définit la première surface d'engagement angulaire (126), et/ou dans lequel un bord d'au moins une de la paire de deuxièmes languettes espacées (120) définit la deuxième surface d'engagement angulaire (124).

13. Dispositif de retenue en métal estampé (116) selon l'une quelconque des revendications 10 à 12, dans lequel chacune de la paire de pattes de retenue (132) comprend une partie plane extérieure (132a) et une partie plane intérieure (132b) reliées par une section coudée (132c), dans lequel la première languette (122) et la paire de deuxièmes languettes espacées (120) sont couplées à la partie plane extérieure (132a).

14. Dispositif de retenue en métal estampé (116) selon la revendication 13, dans lequel la paire de deuxièmes pattes (122) est positionnée sur des côtés opposés de la partie extérieure (132a), et/ou dans lequel la paire de deuxièmes pattes (120) est couplée à la partie plane extérieure (132a) à angle droit.

15. Dispositif de retenue en métal estampé (116) selon la revendication 13 ou la revendication 14, dans lequel la première languette (122) est couplée à une extrémité de la partie plane extérieure (132a) selon un angle transversal, et/ou dans lequel la partie plane intérieure (132b) comprend une fenêtre (144) configurée pour recevoir la première languette (122) pendant l'installation de l'élément de retenue (116).
